(19) Europäisches Patentamt
European Patent Office
Office européen des brevets

(11) **EP 2 786 976 A1**

(12) **EUROPEAN PATENT APPLICATION**
published in accordance with Art. 153(4) EPC

(43) Date of publication:
**08.10.2014 Bulletin 2014/41**

(21) Application number: **12853336.1**

(22) Date of filing: **09.11.2012**

(51) Int Cl.:
**C04B 35/66** (2006.01)       **D01F 9/08** (2006.01)
**D06M 11/79** (2006.01)

(86) International application number:
**PCT/JP2012/007209**

(87) International publication number:
**WO 2013/080455 (06.06.2013 Gazette 2013/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.12.2011   JP 2011263412**

(71) Applicant: **Nichias Corporation**
**Tokyo 104-8555 (JP)**

(72) Inventors:
• **YONAIYAMA, Ken**
**Tokyo 1048555 (JP)**

• **MIHARA, Tetsuya**
**Tokyo 1048555 (JP)**
• **KISHIKI, Tomohiko**
**Tokyo 1048555 (JP)**
• **ISHIHARA, Tetsuya**
**Tokyo 1048555. (JP)**

(74) Representative: **Schmitz, Joseph**
**Isler & Pedrazzini AG**
**Postfach 1772**
**8027 Zürich (CH)**

(54) **MONOLITHIC COMPOSITION**

(57)    A paste-like unshaped composition including inorganic fibers that have the following composition ratio and are not coated with a coating layer; an inorganic binder; and a solvent, wherein the composition further optionally comprises inorganic powder, the ratio of the inorganic fibers and the inorganic powder is 100:0 to 10:90, the composition comprises no pH adjuster and no organic fibers, and when the inorganic powder is contained, the inorganic powder does not contain a needle-like crystal structure, [Composition ratio of inorganic fibers] $SiO_2$ 66 to 82 wt%; CaO 10 to 34 wt%; MgO 3 wt% or less; $Al_2O_3$ 5 wt% or less; and the total of $SiO_2$, CaO, MgO and $Al_2O_3$ is 98 wt% or more.

EP 2 786 976 A1

**Description**

Technical Field

The invention relates to an unshaped composition that is used as a joint filler in a heat-treatment apparatus, an industrial kiln or an incinerator, for example. In particular, the invention relates to a joint filler that fills a gap of refractory tiles, insulating bricks, shells and refractory mortars. More specifically, the invention relates to an unshaped composition containing specific biosoluble inorganic fibers.

Background Art

Conventionally, an unshaped composition contains, as reinforcing fibers, inorganic fibers such as glass fibers, glass wool, ceramic wool, rock wool, alumina fibers, zirconia fibers and silicaalumina fibers. An unshaped composition is inserted into a gap of tiles or the like to form a joint by trowel coating, spray coating, injection or the like, for example. At this time, inorganic fibers contained in an unshaped composition are scattered in the air as dust and the dust is then inhaled by a worker. Inorganic fibers may cause health problems when they are inhaled by a human being and invade the lung. Under such circumstances, in recent years, an unshaped composition has been developed that uses biosoluble fibers as inorganic fibers (Patent Documents 1 to 5, for example).

Related Art Document

Patent Documents

Patent Document 1: JP-A-2006-306713
Patent Document 2: JP-A-2006-282404
Patent Document 3: JP-A-2005-281079
Patent Document 4: JP-T-2002-524384
Patent Document 5: WO2011/083696

Summary of the Invention

An unshaped composition is normally stored after the production. After applied or filled for the purpose of repairing or joint filling of a furnace as mentioned above, the unshaped composition is dried. Thereafter, the unshaped composition is exposed to high temperatures in a furnace. Therefore, it is required to have the following practical properties that differ depending on the state; i.e. when it is in the form of a paste during storage and use; after being applied to equipment or the like, followed by drying; and at the time of heating equipment or the like.
When it is in the form of a paste, the composition is required to have adequate consistency (viscosity) and excellent workability and long-term stability (storage stability). After being dried, the composition is required to suffer only a slight degree of dry shrinkage to undergo a slight change in shape, and have a high dry strength. At the time of heating, the composition is required to experience only a small degree of heat shrinkage and have excellent heat resistance and heat conductivity. For example, it is practically preferable that the composition have a heat shrinkage of less than 50% after heating at 1100°C and no apparent vitrification, deformation or the like be observed when externally examined.
The inventors developed novel biosoluble fibers having excellent fire resistance and biosolubility (Japanese Patent Application No. 2011-59354). An object of the invention is to provide a practically useful unshaped composition that contains biosoluble fibers having excellent fire resistance and biosolubility.
According to the invention, the following unshaped composition is provided.

1. A paste-like unshaped composition comprising inorganic fibers that have the following composition ratio and are not coated with a coating layer; an inorganic binder; and a solvent,
wherein the composition further optionally comprises inorganic powder,
the ratio of the inorganic fibers and the inorganic powder is 100:0 to 10:90,
the composition comprises no pH adjuster and no organic fibers, and
when the inorganic powder is contained, the inorganic powder does not contain a needle-like crystal structure,

[Composition ratio of inorganic fibers]

SiO$_2$ 66 to 82 wt%;
CaO 10 to 34 wt%;
MgO 3 wt% or less;
Al$_2$O$_3$ 5 wt% or less; and

the total of SiO$_2$, CaO, MgO and Al$_2$O$_3$ is 98 wt% is or more.

2. The unshaped composition according to 1 that comprises the inorganic powder.
3. The unshaped composition according to 2, wherein the inorganic powder has a melting point of 1500°C or more in an air atmosphere.
4. The unshaped composition according to 2, wherein the inorganic powder comprises one or two or more selected from silica, alumina, mullite, zircon, zirconia, titania, clay minerals, calcia and magnesia.
5. The unshaped composition according to any of 1 to 4, wherein the inorganic binder comprises a colloid.
6. The unshaped composition according to 5, wherein the colloid is colloidal silica.
7. The unshaped composition according to 6, wherein the colloidal silica has a pH of 9 to 11.
8. The unshaped composition according to any of 1 to 4, wherein the inorganic binder comprises one or two or more selected from colloidal silica, alumina sol, zirconia sol, titania sol and an aqueous aluminum phosphate solution.
9. The unshaped composition according to any of 1 to 8, wherein the inorganic binder is contained in an amount of 1 to 30 parts by weight in terms of solid content when the total of the inorganic fibers and the inorganic powder is taken as 100 parts by weight.
10. The unshaped composition according to any of 1 to 9, which further comprises an organic binder.
11. The unshaped composition according to 10, wherein the organic binder comprises one or two or more selected from an acrylic emulsion, starch and a thickener.
12. The unshaped composition according to 10 or 11, wherein the organic binder is contained in an amount of 0.1 to 20 parts by weight in terms of solid content when the total of the inorganic fibers and the inorganic powder is taken as 100 parts by weight.
13. The unshaped composition according to any of 1 to 12, which does not comprise a chelating agent containing no metal ions.
14. A formed product obtained by drying the unshaped composition according to any of 1 to 13.

According to the invention, it is possible to provide a highly practically usable unshaped composition that comprise biosoluble fibers having excellent fire resistance and biosolubility.

Mode for Carrying out the Invention

The unshaped composition of the invention comprises, as reinforcing fibers, specific biosoluble fibers having excellent fire resistance and biosolubility.
Biosoluble fibers can be roughly divided into Mg-silicate fibers containing a large amount of MgO and Ca-silicate fibers containing a large amount of CaO. In the invention, Ca-silicate fibers are used. Since biosoluble fibers are easily dissolved in water, they are normally dissolved in water contained in the composition, and components in the composition are eluted. The eluted components may cause disadvantages by reacting with other components in the composition or with an object to which the composition is applied. Therefore, a composition that contains ceramic fibers that are hardly dissolved in water may exhibit a behavior that is different from a composition that contains biosoluble fibers. In addition, among biosoluble fibers, a composition containing Mg-silicate fibers and a composition containing Ca-silicate fibers differ in type or amount of components eluted, and hence they may exhibit a different behavior.
When Mg-silicate fibers are used in the unshaped composition, organic fibers are added as a binder in order to ensure a necessary strength. Addition of organic fibers is not required in the case of Ca-silicate fibers. When Mg-silicate fibers are used, it is required to add a pH adjuster (a buffer solution such as a phosphate buffer, a borate buffer, or an acid such as acetic acid). If a pH adjuster is not added, the composition may be solidified during storage, and may suffer a large degree of dry shrinkage. However, addition of a pH adjuster is not required for Ca-silicate fibers. Further, when Mg-silicate fibers are used, the fibers are dissolved unless the surfaces of the fibers are covered with a phosphate or the like. Ca-silicate fibers are not required to be covered.
The Ca-silicate fibers used in the invention have the following composition ratio:

SiO$_2$ 66 to 82 wt% (for example, it can be 66 to less than 75 wt%, 68 to 80 wt%, 70 to 80 wt%, 71 to less than 75 wt%, 71 to 80 wt% or 71 to 76 wt%)
CaO 10 to 34 wt% (for example, it can be 20 to 30 wt% or 21 to 26 wt%)
MgO 3 wt% or less (for example, it can be 1 wt% or less)
Al$_2$O$_3$ 5 wt% or less (for example, 3.5 wt% or less or 3 wt% or less. It can be 1 wt% or more or 2 wt% or more)
Other oxides less than 2 wt%

If SiO$_2$ is in the above-mentioned range, the composition has excellent heat resistance. If CaO and MgO are in the above-mentioned range, the composition has excellent biosolubility before and after heating.

The content of Al$_2$O$_3$ can be 3.4 wt% or less or 3.0 wt% or less, for example. It can be 1.1 wt% or more or 2.0 wt% or more. The content of Al$_2$O$_3$ is preferably 0 to 3 wt%, more preferably 1 to 3 wt%. When Al$_2$O$_3$ is contained in this amount range, the strength is increased.

The above-mentioned inorganic fibers may or may not include, as other oxides, one or more selected from alkali metal oxides (K$_2$O, Na$_2$O or the like), Fe$_2$O$_3$, ZrO$_2$, P$_2$O$_5$, B$_2$O$_3$, TiO$_2$, MnO, R$_2$O$_3$ (R is selected from Sc, La, Ce, Pr, Nd, Sm, Eu, Gd, Tb, Dy, Ho, Er, Tm, Yb, Lu, Y or a mixture thereof). The amounts of other oxides may be 0.2 wt% or less or 0.1 wt% or less. As for the alkali metal oxides, the amount of each oxide may be 0.2 wt% or less, and the total of the alkali metal oxides may be 0.2 wt% or less.

In the biosoluble fibers, the total of SiO$_2$, CaO, MgO and Al$_2$O$_3$ may be larger than 98 wt% or larger than 99 wt%.

The biosoluble fibers are inorganic fibers having a physiological saline dissolution ratio at 40°C of 1% or more. The physiological saline dissolution ratio can be measured by the following method, for example. That is, 1 g of the sample obtained by pulverizing the inorganic fibers to a size of 200 meshes or less and 150 mL of physiological saline are put in a conical flask (volume: 300 mL). This flask is placed in an incubator of 40°C, and a horizontal vibration (120 rpm) is continuously applied for 50 hours. Thereafter, the concentration (mg/L) of each element contained in a filtrate obtained by filtration is measured by an ICP emission spectrometry apparatus. Based on the measured concentration of each element and the content (wt%) of each element in the inorganic fibers before dissolution, the physiological saline dissolution ratio (%) is calculated. Specifically, if the elements to be measured are silicon (Si), magnesium (Mg), calcium (Ca) and aluminum (Al), the physiological saline dissolution ratio C (%) is calculated by the following formula:

C (%) = [Amount (L) of filtrate × (a1 + a2 + a3 + a4) × 100] / [weight (mg) of inorganic fibers before dissolution × (b1 + b2 + b3 + b4) / 100]. In this formula, a1, a2, a3 and a4 are respectively the measured concentration (mg/L) of silicon, magnesium, calcium and aluminum, and b1, b2, b3 and b4 are respectively the content (wt%) of silicon, magnesium, calcium and aluminum in the inorganic fibers before dissolution.

Further, the fibers used in the invention may be pre-treated with a surfactant or a dispersant. By the pre-treatment, the surfaces of the fibers become smooth, and the fibers are hardly bent when a composition is produced by mixing with other components. As a result, they are contained in the composition with the length thereof being maintained long. As a result, the workability or strength is improved, and the fibers suffer a small degree of shrinkage. Further, moisture resistance is improved, whereby storage stability is also improved.

The average fiber diameter of the inorganic fibers is normally 1 to 50 $\mu$m, preferably 2 to 10 $\mu$m and particularly preferably 2 to 5 $\mu$m in respect of strength. The average fiber length is normally 1 to 200 mm, preferably 2 to 50 mm.

The amount of shots having a particle size of 45 $\mu$m or more contained in the inorganic fibers may be more than 10 wt%. The reason therefor is that, by a treatment for reducing the amount of shots, the fiber length becomes too short, and as a result, the heat shrinkage, strength or the like may adversely be affected.

The surfaces of the inorganic fibers contained in the unshaped composition of the invention are not necessarily be covered by a coating layer. As examples of substances that form a coating layer on the surfaces of the inorganic fibers, phosphates, molybdenum compounds, polyamidine compounds, ethyleneimine compounds or the like can be given. As the phosphate, aluminum tripolyphosphate, aluminum dihydrogen tripolyphosphate, aluminum metaphosphate, zinc phosphate, calcium phosphate or the like can be given. As examples of molybdenum compounds, zinc molybdate, aluminum molybdate, calcium molybdate, calcium phosphomolybdate, aluminum phosphomolybdate or the like can be given. The polyamidine compounds include acrylamide, acrylonitrile, N-vinylacrylamidine hydrochloride, N-vinylacrylamide, vinylamine hydrochloride, N-vinylformamide copolymer or the like. As examples of the ethyleneimine compounds, aminoethylene, dimethyleneimine or the like can be given. These substances that form the coating layer may be used singly or in combination of two or more kinds thereof.

The unshaped composition of the invention comprises the above-mentioned inorganic fibers, and further appropriately comprises inorganic powder or an inorganic binder containing Si, Al and/or Ca. The inorganic powder may or may not be added. If the inorganic powder is added, in order to increase the fire resistance, it is desired that the heat resistance of the inorganic powder be higher than that of the inorganic fibers.

Although no specific restrictions are imposed on the inorganic powder, the inorganic powder preferably has a melting point in the atmosphere of 1100°C or more, more preferably 1300°C or more, and further preferably 1500°C or more.

Specifically, inorganic powder composed of one or two or more (mixture) selected from clay minerals such as silica, alumina, mullite (silica: 20 to 30 wt%, alumina: 70 to 80 wt%), zircon, zirconia, kaolin and titania; calcia and magnesia. Silica and alumina are preferable.

In the invention, it is possible to use inorganic powder that does not contain a needle crystal structure. As the inorganic powder containing a needle crystal structure, one or more selected from wollastonite powder, sepiolite powder, attapulgite powder or the like can be given.

As the inorganic binder, colloidal silica, alumina sol, zirconia sol, titania sol, an aqueous aluminum phosphate solution or the like can be given.

The inorganic binder may be a colloid such as colloidal silica, alumina sol, zirconia sol, titania sol or a colloid obtained by integrating these components. A colloidal silica is preferable. A colloidal silica preferably has a pH of 8 or more, more preferably 9 to 11. If the pH is less than 8, the composition may not be a paste having an appropriate viscosity. If the composition contains colloidal silica, the strength of the composition after heating is increased. If an excessive amount of colloidal silica is contained, the unshaped composition may be solidified.

The inorganic binder may be contained in an amount (in terms of solid content) of 1 to 30 parts by weight (preferably 1 to 25 parts by weight, more preferably 1 to 20 parts by weight, further preferably 1 to 15 parts by weight, further more preferably 1 to 12 parts by weight and particularly preferably 2 to 10 parts by weight) when the total weight of the inorganic fibers and the inorganic powder is taken as 100 parts by weight. The inorganic fibers and the inorganic powder are blended such that desired heat resistance, density or the like can be obtained. If the amount of the inorganic fibers is large and the amount of the inorganic powder is small, the unshaped composition that is light in weight can be easily obtained.

In respect of heat resistance, preferable mixing ratios of inorganic fibers and inorganic powder (inorganic fibers : inorganic powder) are shown below.

In the case where the composition contains inorganic powder and the colloidal silica is selected as the inorganic binder and alumina is selected as the inorganic powder, the ratio of the inorganic fibers and the inorganic powder can be inorganic fibers : inorganic powder = 100:0 to 10:90. The ratio of the inorganic fibers and the inorganic powder is preferably inorganic fibers : inorganic powder = 100:0 to 95:5 and 80:20 to 10:90, further preferably, 100:0 to 95:5 and 75:25 to 10:90, more preferably, inorganic fibers : inorganic powder = 100:0 and 70:30 to 10:90, further more preferably 100:0 and 65:35 to 10:90, most preferably, inorganic fibers : inorganic powder = 100:0 and 40:60 to 10:90.

In the case where the composition contains inorganic powder and the colloidal silica is selected as the inorganic binder and mullite is selected as the inorganic powder, the ratio of the inorganic fibers and the inorganic powder can be inorganic fibers : inorganic powder = 100 : 0 to 10 : 90. The amount ratio is preferably 100:0 to 90:10 and 70:30 to 10:90, further preferably 100:0 to 90:10 and 65:35 to 10:90, more preferably inorganic fibers : inorganic powder = 100:0 to 95:5 and 60:40 to 10:90.

In the case where the composition contains inorganic powder and the colloidal silica is selected as the inorganic binder and kaoline is selected as inorganic powder, the ratio of the inorganic fibers and the inorganic powder can be inorganic fibers : inorganic powder = 100 : 0 to 10 : 90. The ratio of the inorganic fibers and the inorganic powder is preferably inorganic fibers : inorganic powder = 100:0 to 80:20 and 60:40 to 10:90, further preferably = 100:0 and 80:10 and 50:50 to 10:90, more preferably, inorganic fibers : inorganic powder 100:0 and 85:15 and 50:50 to 10:90, further more preferably 100:0 to 90:10 and 40:60 to 10:90.

In the case where the composition contains inorganic powder and the colloidal silica is selected as the inorganic binder and silica is selected as inorganic powder, the ratio of the inorganic fibers and the inorganic powder is inorganic fibers : inorganic powder = 100:0 to 10:90.

In the case where the composition contains inorganic powder and the colloidal silica is selected as the inorganic binder and one or more selected from zircon, zirconia and titania are selected as the inorganic powder, the ratio of the inorganic fibers and the inorganic powder is inorganic fibers : inorganic powder = 100:0 to 10:90.

In the case where the composition contains inorganic powder and the colloidal silica is selected as the inorganic binder and one or more selected from calcia and magnesia are selected as the inorganic powder, the amount ratio of the inorganic fibers and the inorganic powder is inorganic fibers : inorganic powder = 100:0 to 10:90. The ratio is preferably 70:30 to 10:90, more preferably 60:40 to 10:90.

The amounts of the inorganic fibers, the inorganic powder and the inorganic binder may be adjusted such that the weight ratio of $SiO_2$, CaO and $Al_2O_3$ in the composition becomes one with which the formed product obtained therefrom is not molten in a temperature range in which the composition is used.

In the unshaped refractory material of the invention, the inorganic fibers, the inorganic powder and the inorganic binder are appropriately combined such that the resulting formed product is preferably not molten or has a shrinkage of less than 50% after heating at 1100°C. More preferably, the inorganic fibers, the inorganic powder and the inorganic binder are selected such that the formed product is not molten or has a shrinkage of less than 50% after heating at 1200°C. Further preferably, the inorganic fibers, the inorganic powder and the inorganic binder are selected such that the formed product is not molten or has a shrinkage of less than 50% after heating at 1300°C. The shrinkage is preferably 30% or less, further preferably 20% or less, further preferably 10% or less, and particularly preferably 5% or less.

The average particle size of the inorganic powder used in the composition of the invention is normally 0.1 to 100 μm, preferably 0.2 to 50 μm, and particularly preferably 0.2 to 10 μm. If the average particle size is less than 0.1 μm, separation may occur easily. If the average particle size exceeds 100 μm, uniform dispersion may become difficult.

The unshaped composition of the invention further comprises a solvent.

Although the solvent is not particularly restricted, water and a polar organic solvent can be given. As the polar organic solvent, a monovalent alcohol such as ethanol and propanol and a divalent alcohol such as ethylene glycol can be given. Of these, water is preferable since it does not deteriorate the working environment, posing no burden on the environment. If the components are blended in the form of a suspension liquid or a dispersion liquid or the like, the solvent therefor is also contained. If the solids are blended in the form of a suspension liquid, a dispersion liquid or the like, the blended amount is the blended amount of the solids.

The content of the solvent is normally 10 to 600 parts by weight (preferably 20 to 400 parts by weight) when the total content of the inorganic fibers and the inorganic powder is taken as 100 parts by weight. Due to the presence of a solvent, the fluidity can be adjusted, and the mechanical strength (in particular, bending strength) of a joint can be increased. If the content of the solvent is too large, the consistency of the unshaped composition is increased, and as a result, the composition may drip during the working, and joint shrinkage due to the drying may become significant.

The unshaped composition of the invention may comprise an organic binder, additives or the like in addition to the inorganic fibers, the inorganic powder, the inorganic binder and the solvent. It does not necessary to include a "chelating agent containing no metal ions."

As the organic binder, organic fibers, acrylic emulsions, starch, thickeners or the like can be given.

When the total amount of the inorganic fibers and the inorganic powder is taken as 100 parts by weight, it may contain the solid matters in an amount of 0.1 to 20 parts by weight (preferably 0.5 to 10 parts by weight, preferably 0.5 to 8 parts by weight, and further preferably 1 to 5 parts by weight).

The organic fibers serve as a protective film of the inorganic fibers. The composition of the invention may not necessarily contain organic fibers. The organic fibers are not particularly restricted, and any of natural fibers or synthetic fibers that are subjected to a hydrophobic treatment may be used. As examples of the natural fibers, pulp, cotton, hemp or the like can be mentioned. As examples of the synthetic fibers, vinylon, rayon, polypropylene, polyethylene or the like can be mentioned.

As the thickener, hydroxyethyl cellulose, a sodium acrylate polymer, polyether polyol, acryl-based high-molecular polyester amine, ethylene oxide, carboxylmethyl cellulose (CMC) or the like can be given.

When the total amount of the inorganic fibers and the inorganic powder is taken as 100 parts by weight, the content of solid matters combining the inorganic binder and the organic binder is preferably 1 to 50 parts by weight, more preferably 1 to 30 parts by weight, and further preferably 1 to 20 parts by weight.

It is preferred that the inorganic fibers be hydrophobic to some extent. The reason therefor is that, if the inorganic fibers are hydrophobic, when they are put in water, they float for a certain period of time without being submerged suddenly. As a result, the inorganic fibers can be mixed well with one another or with other materials. The hydrophobic treatment means a treatment for increasing the hydrophobic properties of fibers. As the method for the hydrophobic treatment, a method in which a part around the fibers is coated with a hydrophobic chemical, for example.

As the additive, a dispersant, an antiseptic, a pH adjuster or the like can be mentioned.

No specific restrictions are imposed on the antiseptic. However, an inorganic compound or an organic compound, etc. each containing a nitrogen atom or a sulfur atom can be given, for example. The content of the antiseptic is not particularly restricted, preferably is 0.1 to 5 parts by weight relative to the total of the inorganic fibers and the inorganic powder that is taken as 100 parts by weight.

The composition of the invention does not necessarily contain a pH adjuster. As the pH adjuster, a buffer solution or an acid can be given, for example. As the buffer solution, a phthalate standard solution (Sorensen's buffer solution) that is a pH 4 standard solution and a phosphate standard equimolal solution that is a pH 7 standard solution can be given. As the acid, acetic acid, formic acid or the like can be given. pH is preferably about 4 to 8.5.

The dispersant is not particularly restricted, and known dispersants can be used. Specific examples thereof include carboxylic acids, polyvalent alcohols, amines or the like. The content of the dispersant is not particularly restricted, preferably 1 to 5 parts by weight relative to 100 parts by weight of the content of the solid matters combining the inorganic fibers and the inorganic powder.

No particular restrictions are imposed on the thickener, and known thickener can be used. As specific examples of the thickener, hydroxylethyl cellulose, a sodium acrylate polymer, polyether polyol, acrylic high-molecular polyester amine, ethylene oxide, carboxymethyl cellulose (CMC) or the like can be given. Although the content of the thickener is not particularly restricted, the content in terms of solid content is preferably 0.1 to 20 parts by weight relative to 100 parts by weight of the solid matters combining the inorganic fibers and the inorganic powder.

The unshaped composition of the invention can be produced by mixing and stirring the components. The formed product according to the invention can be obtained by forming the unshaped composition, followed by drying/heating.

Since the composition of the invention is in the form of a paste (mortar), it can be applied by a trowel, solidified by hands or scattered by means of a pressure gun.

The formed product obtained from the unshaped composition of the invention has excellent heat resistance and is not molten preferably at 1100°C, more preferably at 1300°C, and further preferably at 1500°C. Specifically, the formed product is obtained by molding the unshaped composition in a dimension of 160 mm (length) x 40 mm (width) x 40 mm (height) in accordance with JIS R 2553, followed by heating at 100°C for 24 hours. It is preferred that this formed product be not molten when heated in a furnace at a predetermined temperature for 24 hours. The "molten" means that the heat shrinkage measured by the method in the Examples is 50% or more, or that the formed product is apparently vitrified or deformed when the external appearance is observed.

The density after drying of the unshaped composition of the invention is normally 0.1 to 1.5 g/cm$^3$.

The unshaped composition of the invention has excellent practical properties in respect of long-term storage stability, bending strength and heat shrinkage.

In particular, the unshaped composition of the invention using Ca-silicate fibers has a smaller heat shrinkage than the heat shrinkage of the unshaped composition that uses ceramic fibers (containing silica: 40 to 60 wt%, alumina: 60 to 40 wt%) or Mg-silicate fibers. The heat shrinkage is preferably 10% or less, more preferably 5% or less, and particularly preferably 3% or less.

EXAMPLES

Example 1

[Production of unshaped composition]

Unshaped compositions 1 to 4 having the composition ratios shown in Table 1 were produced.

The inorganic fibers A comprise 73 wt% of $SiO_2$, 24 wt% of CaO, 0.3 wt% of MgO and 2 wt% of $Al_2O_3$.

As the inorganic binder, colloidal silica (Snow-tex 30, manufactured by Nissan Chemical Industries, Ltd., a suspension having a pH of 9 to 10 and a solid content of 30%) was used.

As the organic binder, a thickener and an acrylic emulsion were used.

In Table 1, the amounts of the inorganic fibers A and the inorganic powder are expressed in percent by weight when the total of the inorganic fibers A and the inorganic powder is taken as 100 wt%.

The amounts of the inorganic binder, the organic binder and the water are expressed in parts by weight when the total of the inorganic fibers A and the inorganic powder is taken as 100 parts by weight. The amounts of the inorganic binder and the organic binder in the table is the amount in terms of solid content.

The density after drying at 100°C for 24 hours was 0.26 g/cm$^3$, 0.44 g/cm$^3$, 0.75 g/cm$^3$ and 1.07 g/cm$^3$. No dry shrinkage was observed. The density was calculated by measuring the dimension (volume) and the weight in accordance with JIS A 1116.

Table 1

| Unshaped composition | | 1 | 2 | 3 | 4 |
|---|---|---|---|---|---|
| Inorganic fibers A | | 78 | 65 | 33 | 26 |
| Inorganic powder | Alumina | - | - | 67 | 74 |
| | Silica | 22 | 35 | - | - |
| Inorganic binder | | 3 | 5 | 4 | 3 |
| Organic binder | | 4 | 3 | 2 | 1 |
| Water | | 360 | 180 | 90 | 45 |

Comparative Example 1

[Production of unshaped composition]

Unshaped compositions 1' to 4' having the composition ratios shown in Table 2 were produced. Specifically, unshaped compositions 1' to 4' were produced by using the ceramic fibers (silica: 52 wt%, alumina: 48 wt%) instead of the inorganic fibers A of the unshaped compositions 1 to 4 and silica as the inorganic powder was not used.

For reference, the weight ratio of $SiO_2$, CaO and $Al_2O_3$ in the composition is shown in Table 7.

Table 2

| Unshaped composition | 1' | 2' | 3' | 4' |
|---|---|---|---|---|
| Ceramic fibers | 78 | 65 | 33 | 26 |
| Alumina | 22 | 35 | 67 | 74 |
| Inorganic binder | 3 | 5 | 4 | 3 |
| Organic binder | 4 | 3 | 2 | 1 |
| Water | 360 | 180 | 90 | 45 |

Evaluation Example 1

As for the unshaped compositions 1 to 4 and 1' to 4' obtained in Example 1 and Comparative Example 1, the following evaluation was conducted.

(1) Long-term storage stability

As for the unshaped composition immediately after the production, after the 3-month storage and after the 6-month storage, the consistency, the bending strength and the heat shrinkage were measured by the following methods. The results are shown in Table 3. The unshaped compositions 1 to 4 obtained in Example 1 suffered no deterioration in physical properties even after the storage of 6 months.

(i) Consistency

The consistency was measured in accordance with JIS K 2220 by means of a consistometer. As the metal cup, one having an inner diameter of 100 mm and an internal height of 50 mm was used. As the cone, cone A was used.

(ii) Bending strength

The unshaped composition was molded into a product with a dimension of 160 mm (length) x 40 mm (width) x 40 mm (height), and the resulting formed product was heated and dried at 100°C for 24 hours, whereby a heat insulating material was obtained.
The heat insulating material was heated at 1100°C for 24 hours, and the bending strength of the heat insulating material after the heating was obtained. The bending strength was obtained by measuring the breaking load by using a three-point bending testing machine (Tensilon) and calculating according to the following formula:

$$\text{Bending strength (MPa)} = \{3 \times \text{maximum load (N)} \times \text{center distance (mm) of support roll}\}/\{2 \times \text{width (mm) of heat insulating material} \times (\text{thickness (mm) of heat insulating material})^2\}$$

(iii) Heat shrinkage

In accordance with JIS R 2553, the unshaped composition was molded into a product with a dimension of 160 mm (length) x 40 mm (width) x 40 mm (height), and the resulting formed product was heated and dried at 100°C for 24 hours, whereby a heat insulating material was obtained.
The heat insulating material was heated at 1300°C for 24 hours in an electric furnace, and the length of the heat insulating material after the heating was measured. The heat shrinkage was obtained by the following formula taking the length of the insulating material before the heating as X mm and the length of the insulating material after the heating as Y mm.

$$\text{Heat shrinkage (\%)} = \{(X-Y)/X\} \times 100$$

Table 3

| Unshaped composition | | 1 | 2 | 3 | 4 |
|---|---|---|---|---|---|
| Consistency | Initial stage | 280 | 230 | 220 | 205 |
| | After 3 months | 277 | 220 | 219 | 195 |
| | After 6 months | 273 | 220 | 214 | 193 |
| Bending strength (Mpa) | Initial stage | 0.45 | 0.70 | 0.89 | 1.19 |
| | After 3 months | 0.45 | 0.78 | 1.11 | 1.91 |
| | After 6 months | 0.45 | 0.80 | 0.99 | 2.13 |
| Heat shrinkage (%) 1300°C×24hr | Initial stage | 1.7 | 1.2 | -0.1 | 0.3 |
| | After 3 months | 1.4 | 1.4 | 0.0 | 0.4 |
| | After 6 months | 1.6 | 1.5 | 0.1 | 0.2 |

(2) Heat shrinkage

As for the unshaped composition immediately after the production, the shrinkage (%) after heating at 1100°C, 1200°C and 1300°C for 24 hours was measured in the same manner as in (1)(iii). The measurement was conducted 5 times and the average value thereof is shown in Table 4. It is understood that the unshaped compositions 1 to 4 suffered a smaller degree of shrinkage as compared with the unshaped compositions 1' to 4'.

Table 4

| | Heat shrinkage (%) | | | | | | | |
|---|---|---|---|---|---|---|---|---|
| Unshaped composition | 1 | 1' | 2 | 2' | 3 | 3' | 4 | 4' |
| 1100°C×24hr | 1.3 | 2.2 | 1.0 | 2.4 | 0.9 | 1.5 | 0.9 | 1.6 |
| 1200°C×24hr | 1.1 | 2.8 | 1.2 | 2.7 | 0.4 | 2.1 | 0.5 | 2.2 |
| 1300°C×24hr | 1.7 | 3.5 | 1.2 | 3.5 | -0.1 | 3.7 | 0.3 | 3.9 |

(3) Bending strength

As for the unshaped composition immediately after the production, the bending strength (Mpa) after heating at 1100°C, 1200°C and 1300°C for 24 hours was measured in the same manner as in (1)(ii). The measurement was conducted 5 times and the average value thereof is shown in Table 5. It is understood that the bending strength of the unshaped compositions 1 to 4 was almost similar to that of the unshaped compositions 1' to 4'.

Table 5

| | 1100°C×24hr | | 1200°C×24hr | | 1300°C×24hr | | 1300°C×24hr | |
|---|---|---|---|---|---|---|---|---|
| Unshaped composition | 1 | 1' | 2 | 2' | 3 | 3' | 4 | 4' |
| Bending strength (MPa) | 0.45 | 0.35 | 0.70 | 0.51 | 0.89 | 0.91 | 1.19 | 1.47 |

Example 2

[Production of unshaped composition]

Unshaped compositions 10 to 20 were obtained in the same manner as in Example 1, except that the composition ratios were changed to those shown in Table 6. For reference, the weight ratio of $SiO_2$, $CaO$ and $Al_2O_3$ in the composition is shown in Table 7.

Evaluation Example 2

[Evaluation of unshaped composition]

As for the unshaped compositions obtained in Example 2, the heat shrinkage (%) after heating at 1100°C, 1200°C, 1300°C, 1400°C and 1500°C for 24 hours was measured in the same manner as in Evaluation Example 1. When the heat shrinkage was 50% or more or the composition was apparently vitrified or deformed when the appearance was externally evaluated, the composition was evaluated as "molten". The results are shown in Table 6.

Table 6

| Examples | | 10 | 11 | 12 | 13 | 14 | 15 | 16 | 17 | 18 | 19 | 20 |
|---|---|---|---|---|---|---|---|---|---|---|---|---|
| Inorganic fibers A | | 100 | 95 | 90 | 85 | 80 | 75 | 70 | 65 | 60 | 40 | 20 |
| Inorganic powder | Alumina | 0 | 5 | 10 | 15 | 20 | 25 | 30 | 35 | 40 | 60 | 80 |
| Inorganic binder | Colloidal silica | 5 | 5 | 5 | 5 | 5 | 5 | 5 | 5 | 5 | 5 | 5 |
| Organic binder | | 3 | 3 | 3 | 3 | 3 | 3 | 3 | 3 | 3 | 3 | 3 |
| Water | | 180 | 180 | 180 | 180 | 180 | 180 | 180 | 180 | 180 | 180 | 180 |
| 1100°C | | 1.0 | 0.9 | 0.8 | 0.7 | 1.6 | 0.6 | 0.8 | 0.9 | 0.9 | 0.8 | 0.9 |
| 1200°C | | 1.5 | 12.9 | 39.9 | 34.6 | 11.4 | 4.0 | 0.2 | 0.1 | 0.3 | 0.3 | 0.5 |
| 1300°C | | 2.5 | 24.4 | Molten | Molten | Molten | 41.2 | 4.4 | 0.3 | -0.3 | -0.3 | 0.4 |
| 1400°C | | 9.3 | Molten | Molten | Molten | Molten | Molten | Molten | 11.3 | 2.1 | 1.1 | 5.0 |
| 1500°C | | 17.5 | Molten | Molten | Molten | Molten | Molten | Molten | Molten | Molten | 21.3 | 12.5 |

Table 7

|  | Ex. 1 | Ex. 2 | Ex. 3 | Ex. 4 | Com. Ex. 1 | Com. Ex. 2 | Com. Ex. 3 | Com. Ex. 4 |
|---|---|---|---|---|---|---|---|---|
| Com-position | 1 | 2 | 3 | 4 | 1' | 2' | 3' | 4' |
| $SiO_2$ | 80.2 | 83.8 | 27.0 | 21.3 | 40.8 | 35.7 | 19.7 | 15.5 |
| CaO | 18.7 | 15.2 | 7.8 | 6.2 | 0.0 | 0.0 | 0.0 | 0.0 |
| $Al_2O_3$ | 1.1 | 0.9 | 65.2 | 72.5 | 59.2 | 64.3 | 80.3 | 84.5 |

|  | Ex. 10 | Ex. 11 | Ex. 12 | Ex. 13 | Ex. 14 | Ex. 15 | Ex. 16 | Ex. 17 | Ex. 18 | Ex. 19 | Ex. 20 |
|---|---|---|---|---|---|---|---|---|---|---|---|
| Com-position | 10 | 11 | 12 | 13 | 14 | 15 | 16 | 17 | 18 | 19 | 20 |
| $SiO_2$ | 75.0 | 71.4 | 67.9 | 64.3 | 60.8 | 57.3 | 53.7 | 50.2 | 46.7 | 32.6 | 18.7 |
| CaO | 23.6 | 22.4 | 21.2 | 20.0 | 18.8 | 17.6 | 16.4 | 15.2 | 14.1 | 9.3 | 4.7 |
| $Al_2O_3$ | 1.4 | 6.2 | 10.9 | 15.7 | 20.4 | 25.1 | 29.9 | 34.6 | 39.3 | 58.0 | 76.7 |

Example 3

[Production of unshaped composition]

Unshaped compositions 21 to 30 were obtained in the same manner as in Example 1, except that the composition ratios were changed to those shown in Tables 8 and 9.

Evaluation Example 3

[Evaluation of unshaped composition]

As for the unshaped compositions 21 to 30 obtained in Example 3, the heat shrinkage (%) after heating at 1300°C for 24 hours was measured in the same manner as in Evaluation Example 1. The results obtained are shown in Tables 8 and 9.

Table 8

| Examples | | 21 | 22 | 23 | 24 | 25 |
|---|---|---|---|---|---|---|
| Inorganic fibers A | | 78 | 78 | 77 | 65 | 33 |
| Inorganic powder | Zircon | | 22 | 22 | 35 | 67 |
| | Titania | | | 1 | | |
| | Kaolin | 22 | | | | |
| Inorganic binder | Colloidal silica | 3 | 3 | 3 | 5 | 5 |
| Organic binder | | 4 | 4 | 4 | 3 | 3 |
| Water | | 360 | 360 | 360 | 180 | 90 |
| 1300°C | | 21.8 | 4.5 | 5.8 | 3.8 | 1.5 |

Table 9

| Examples | | 26 | 27 | 28 | 29 | 30 |
|---|---|---|---|---|---|---|
| Inorganic fibers A | | 35 | 35 | 35 | 35 | 35 |
| Inorganic powder | Alumina | 65 | 65 | 65 | 65 | 65 |
| Inorganic binder | Colloidal silica | 3 | 6 | 10 | 15 | 30 |
| Organic binder | | 1.5 | 1.5 | 1.5 | 1.5 | 1.5 |

(continued)

| Examples | 26 | 27 | 28 | 29 | 30 |
|---|---|---|---|---|---|
| Water | 70 | 70 | 70 | 70 | 70 |
| 1300°C | 0.0 | -0.1 | 0.2 | 0.5 | 0.3 |

Industrial Applicability

The unshaped composition of the invention is in the form of a paste and can be used as a joint filler, a repairing material and a heat insulating material.

Although only some exemplary embodiments and/or examples of this invention have been described in detail above, those skilled in the art will readily appreciate that many modifications are possible in the exemplary embodiments and/or examples without materially departing from the novel teachings and advantages of this invention. Accordingly, all such modifications are intended to be included within the scope of this invention.

The documents described in the specification and a Japanese application on the basis of which the present application claims Paris convention priority are incorporated herein by reference in its entirety.

## Claims

1. A paste-like unshaped composition comprising inorganic fibers that have the following composition ratio and are not coated with a coating layer; an inorganic binder; and a solvent,
   wherein the composition further optionally comprises inorganic powder,
   the ratio of the inorganic fibers and the inorganic powder is 100:0 to 10:90,
   the composition comprises no pH adjuster and no organic fibers, and
   when the inorganic powder is contained, the inorganic powder does not contain a needle-like crystal structure,
   [Composition ratio of inorganic fibers]
   $SiO_2$ 66 to 82 wt%;
   CaO 10 to 34 wt%;
   MgO 3 wt% or less;
   $Al_2O_3$ 5 wt% or less; and
   the total of $SiO_2$, CaO, MgO and $Al_2O_3$ is 98 wt% or more.

2. The unshaped composition according to claim 1 that comprises the inorganic powder.

3. The unshaped composition according to claim 2, wherein the inorganic powder has a melting point of 1500°C or more in an air atmosphere.

4. The unshaped composition according to claim 2, wherein the inorganic powder comprises one or two or more selected from silica, alumina, mullite, zircon, zirconia, titania, clay minerals, calcia and magnesia.

5. The unshaped composition according to any of claims 1 to 4, wherein the inorganic binder comprises a colloid.

6. The unshaped composition according to claim 5, wherein the colloid is colloidal silica.

7. The unshaped composition according to claim 6, wherein the colloidal silica has a pH of 9 to 11.

8. The unshaped composition according to any of claims 1 to 4, wherein the inorganic binder comprises one or two or more selected from colloidal silica, alumina sol, zirconia sol, titania sol and an aqueous aluminum phosphate solution.

9. The unshaped composition according to any of claims 1 to 8, wherein the inorganic binder is contained in an amount of 1 to 30 parts by weight in terms of solid content when the total of the inorganic fibers and the inorganic powder is taken as 100 parts by weight.

10. The unshaped composition according to any of claims 1 to 9, which further comprises an organic binder.

11. The unshaped composition according to claim 10, wherein the organic binder comprises one or two or more selected from an acrylic emulsion, starch and a thickener.

12. The unshaped composition according to claim 10 or 11, wherein the organic binder is contained in an amount of 0.1 to 20 parts by weight in terms of solid content when the total of the inorganic fibers and the inorganic powder is taken as 100 parts by weight.

13. The unshaped composition according to any of claims 1 to 12, which does not comprise a chelating agent containing no metal ions.

14. A formed product obtained by drying the unshaped composition according to any of claims 1 to 13.

<table>
<tr><td colspan="2" align="center">**INTERNATIONAL SEARCH REPORT**</td><td colspan="2">International application No.<br>PCT/JP2012/007209</td></tr>
</table>

| | |
|---|---|
| A. CLASSIFICATION OF SUBJECT MATTER | |

*C04B35/66*(2006.01)i, *D01F9/08*(2006.01)i, *D06M11/79*(2006.01)i

According to International Patent Classification (IPC) or to both national classification and IPC

**B. FIELDS SEARCHED**

Minimum documentation searched (classification system followed by classification symbols)
C04B35/66, D01F9/08, D06M11/79

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2008-162853 A (Nichias Corp.),<br>17 July 2008 (17.07.2008),<br>claims; paragraphs [0011], [0015], [0031],<br>[0058], [0065], [0070], [0075]<br>(Family: none) | 1-14 |
| A | JP 2003-3335 A (Toshiba Monofrax Kabushiki<br>Kaisha),<br>08 January 2003 (08.01.2003),<br>claims<br>(Family: none) | 1-14 |
| A | WO 2011/083696 A1 (Nichias Corp.),<br>14 July 2011 (14.07.2011),<br>claims<br>& EP 2522646 A1    & AU 2010340533 A<br>& CN 102741196 A | 1-14 |

| ☒ Further documents are listed in the continuation of Box C. | ☐ See patent family annex. |
|---|---|

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>31 January, 2013 (31.01.13) | Date of mailing of the international search report<br>12 February, 2013 (12.02.13) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2012/007209

C (Continuation). DOCUMENTS CONSIDERED TO BE RELEVANT

| Category* | Citation of document, with indication, where appropriate, of the relevant passages | Relevant to claim No. |
|---|---|---|
| A | JP 2005-514318 A (The Morgan Crucible Company PLC),<br>19 May 2005 (19.05.2005),<br>claims<br>& US 2004/0254056 A1     & US 2005/0233887 A1<br>& GB 2383793 A     & EP 1474366 A<br>& WO 2003/059835 A1     & DE 60301263 D<br>& CA 2470642 A     & BR 306631 A<br>& AT 301622 T     & ES 2243884 T<br>& PL 373871 A     & CN 1612845 A<br>& RU 2004123789 A     & ZA 200404146 A<br>& AU 2003201632 A | 1-14 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006306713 A
- JP 2006282404 A
- JP 2005281079 A
- JP 2002524384 T
- WO 2011083696 A
- JP 2011059354 A